# EUROPÄISCHE PATENTANMELDUNG

(11) **EP 3 145 059 A1**
(43) Veröffentlichungstag der Anmeldung: **22.03.2017**
(21) Anmeldenummer: 15186060.8
(22) Anmeldetag: 21.09.2015
(51) Int. Cl.: H02K 3/48, H02K 15/00

(54) **KÄFIGLÄUFER**

(71) Anmelder: Siemens Aktiengesellschaft, 80333 München (DE)
(72) Erfinder: Fischer, Ralf, 90419 Nürnberg (DE); Reinhard, Markus, 91207 Lauf (DE)

(57) **Zusammenfassung**

Die Erfindung betrifft einen Käfigläufer einer Asynchronmaschine mit radial geschlossenen oder teilgeöffneten Nutaussparungen (15), mit Leiterstäben (16), die in den Nutaussparungen (15) angeordnet sind und die durch einen metallischen Epoxydkleber fixiert sind.

## Beschreibung

Die Erfindung betrifft einen Käfigläufer einer Asynchronmaschine, eine Asynchronmaschine und ein Verfahren zur Herstellung eines Käfigläufers.

Käfigläufer von Asynchronmaschinen sind seit Jahrzehnten bekannt und bewährt. Im Laufe der Zeit haben sich dabei für verschiedenste Anwendungen unterschiedliche Formen der Käfigstäbe herausgebildet, die jeweils bestimmte Eigenschaften aufweisen und somit für diese Anwendungen besonders geeignet sind. So werden bei schweranlaufenden Anwendungen häufig Doppelkäfige eingesetzt, bei denen zwei oder mehrere Stäbe in einer Läufernut eingebracht werden. Auch andere Stabformen, die den Stromverdrängungseffekt begünstigen, werden häufig eingesetzt.

Dabei werden bis zu einer gewissen Baugröße Leiterstäbe durch ein Aluminiumdruckgussverfahren in den Rotor eingebracht. Bei im Durchmesser größeren Maschinen wird aber jeder Stab manuell in den Rotor eingebracht. Jedoch ist für jede Stabform ein eigener Blechschnitt eines Rotorblechs notwendig. Dieser Blechschnitt definiert bei einem Druckgussverfahren die Form des Leiterstabes. Bei eingelegten Stäben wird die Rotornut ebenfalls der Stabform nachempfunden um durch einen Formschluss einen entsprechend festen Sitz der Stäbe zu erhalten.

Nachteilig dabei ist die Notwendigkeit für jede Stabform einen eigenen Blechschnitt bereitzustellen, was einen Aufwand bezüglich der Vielzahl verschiedener Werkzeuge für die Produktion der Bleche bedeutet. Diese Vielzahl der Stanzwerkzeuge ist sehr kapitalintensiv und diese erlauben aufgrund von Verschleißerscheinungen nur eine begrenzte Nutzungsdauer.

Ausgehend davon liegt der Erfindung die Aufgabe zugrunde, die Menge der vorgehaltenen Werkzeuge zu reduzieren, ebenso die Variantenvielfalt der Blechschnitte zu reduzieren um so einen Käfigläufer zu schaffen, der sich in einfacher Art und Weise auch für ein Baukastensystem eines Asynchronmotors eignet. Es sollen sich also unterschiedliche Leiterquerschnitte bei einem Blechschnitt einer Achshöhe realisieren lassen. Des Weiteren soll ein derartiger Käfigläufer einfach herzustellen zu sein.

Die Lösung der gestellten Aufgabe gelingt durch einen Käfigläufer einer Asynchronmaschine mit radial geschlossenen oder teilgeöffneten Nutaussparungen, mit Leiterstäben, die in den Nutaussparungen angeordnet sind und die durch einen metallischen Epoxydkleber fixiert sind.

Die Lösung der gestellten Aufgabe gelingt auch durch eine Asynchronmaschine mit einem derartigen Käfigläufer nach Anspruch 2.

Die Lösung der gestellten Aufgabe gelingt auch durch ein Verfahren zur Herstellung eines derartigen Käfigläufers nach Anspruch 4.

Erfindungsgemäß weist nunmehr die Fertigung dieses Käfigläufers für eine Achshöhe lediglich nur noch einen einzigen Universalblechschnitt auf. Dieser Universalblechschnitt weist vergleichsweise größere und universelle Nutaussparungen auf. Diese Aussparungen können in ihrer Ausgestaltungen frei gewählt werden und sind dabei kreisrund, ellipsenförmig, rechteckig, vieleckig oder trapezförmig ausgestaltet.

Es sind in Umfangsrichtung eines Bleches betrachtet, alle Aussparungen in ihrem Querschnitt gleich. Es sind jedoch auch Variationsmöglichkeiten der Nutaussparungen pro Blech möglich. Des Weiteren sind auch axial innerhalb eines Blechpakets des Rotors unterschiedliche Varianten möglich. Dabei hat jedes Blech die gleichen geometrischen Abmessungen der Nutaussparungen jedoch andere geometrische Formen und oder Abmessungen der Nutaussparungen als die axial folgenden Bleche des Rotors. Es ist somit auch eine axial wiederkehrende Folge von Blechen identischen Blechschnitts möglich. Entscheidend ist dabei immer, dass die in den Nutaussparungen axial einzusetzenden Leiterstäbe mit ausreichend radialem Spiel in die Nutaussparungen einzusetzen sind. Sowohl die geometrischen Ausgestaltungen als auch die Abmessungen der Nutaussparung beeinflussen dabei das magnetische Verhalten des Käfigläufers und damit letztendlich das angestrebte Betriebsverhalten der Asynchronmaschine.

In diese Nutaussparungen der Bleche bzw. des Blechpakets werden die Leiterstäbe axial eingebracht, die aber nicht notwendigerweise einen engen Presssitz in der Nutaussparung aufweisen müssen. Insbesondere bei kleineren Maschinen wird der Käfig als Ganzes in das Rotorblechpaket eingebracht, dabei sind die Leiterstäbe einseitig bereits mit einem Kurzschlussring verbunden und bilden einen sogenannten Halbkäfig. Dabei reicht auch bereits ein Mindermaß der Stabhöhe.

Der nunmehr verbleibende Raum innerhalb der Nutaussparung zwischen Blechpaket und Stab aus Aluminium oder Kupfer, wird durch ein Epoxydharz aufgefüllt, das als Emulsion mit ferromagnetischen Partikeln kleiner Korngröße (Eisen, Kobalt oder Nickelpulver) versetzt ist. Diese thermisch leitfähige Emulsion kann ergänzend mit Silberpartikeln versetzt sein, um die Leitfähigkeit zu erhöhen.

Die Partikel sind dabei von unterschiedlicher oder gleicher geometrischer Form. Die Abmessungen selbst bewegen sich in einem Zahlenbereich von einigen µm bis zu einigen mm. Durch die Größe der Partikel und/oder die räumliche Verteilung der Partikel innerhalb der Nutaussparung und/oder die Dichte der jeweiligen Partikel in der Nutaussparung wird die magnetische Leitfähigkeit innerhalb der Nutaussparung zwischen Leiterstab und Blechpaket beeinflusst.

Ferromagnetische Partikel sind als Pulver erhältlich und vergleichsweise kostengünstig, so dass die Herstellung einer solchen Emulsion mit gebräuchlichem Epoxydharz problemlos möglich ist. Dieser Verguss der Leiterstäbe in den Nutaussparungen geschieht dabei ohne weiteres Einwirken auf die Stäbe selbst und erzeugt einen festen Verbund mit dem Rotorblechpaket. Die elektrische Leitfähigkeit dieses Vergusses ist geringer als die Leitfähigkeit eines massiven metallischen Leiters, so dass auch Wirbelstromverluste unterdrückt werden.

Die magnetische Leitfähigkeit des ausgehärteten Epoxydklebers hängt nunmehr maßgeblich von der Anzahl und Größe der eingelagerten ferromagnetischen Partikel ab, liegt aber auf jeden Fall über der magnetischen Leitfähigkeit von Luft. Die Magnetfeldführung im Bereich der vergossenen Nuten wird durch die ferromagnetischen Partikel im Epoxydharz bzw. Epoyxdkleber gewährleistet.

Die Kraftentwicklung der dynamoelektrischen Maschine setzt also bei der Magnetfeldführung im Bereich der vergossenen Nuten an, so dass die Kraftentwicklung einer Asynchronmaschine mit einem erfindungsgemäßen Käfigläufer bereits besser ist, als bei einem Läufer mit einer vergleichsweise dicken Nutisolation z.B. von Schleifringläufern.

In den Nutaussparungen die kreisrund oder elliptisch etc. ausgebildet sein können, werden die Stäbe eingesetzt und in den verbleibenden Raum wird nunmehr ein magnetisch leitfähiger Epoxydkleber z.B. auf Nickel- oder Eisenbasis aufgefüllt. Insbesondere durch das Aushärten wird der Stab in der Nutaussparung fixiert und eine ausreichende magnetische Leitfähigkeit geschaffen.

Die magnetische Leitfähigkeit des ausgehärteten Epoxydklebers hängt maßgeblich von der Anzahl und/oder der Größe und/oder der Verteilung der eingelagerten ferromagnetischen Partikel innerhalb der Nutaussparung ab.

Durch die Verwendung nur eines einzigen Universalblechschnitts pro Achshöhe wird ein erheblicher Verbundeffekt herbeigeführt und trotzdem weiterhin die Möglichkeit für verschiedene Stabformen gestattet, um diverse Applikationen, wie Stromverdrängungsläufer, Rundstabläufer, etc. abzudecken. Dies führt zu deutlichen Kostenvorteilen ohne dabei auf technische Vorteile verzichten zu müssen.

Metallisierte Klebstoffe sind bekannt, deshalb ist die Verarbeitbarkeit dieser Epoxydkleber während des Herstellungsprozesses sehr gut.

Der Epoxydkleber, der als Füllmaterial zwischen Leiterstab und Blechpaket verwendet wird, ist magnetisch leitfähig und stellt daher eine nachträgliche Anpassung des Rotoreisens an den Stab dar. Gleichzeitig ist der ohmsche Widerstand des Epoxydklebers höher als der von Elektroblech, was eine Isolation des Stabes in der Nut bedeutet und damit gegenüber der konventionellen Bauform mit eingegossenen Stäben geringere Stromverluste zur Folge hat.

Durch die geringere Dichte des Epoxydklebers gegenüber normalem Elektroblech verringert sich die Schwungmasse gegenüber dem vergleichsweise bekannten Blechpaketen des Rotors. Es ist somit eine hochdynamische Asynchronmaschine möglich, wie sie bei Werkzeugmaschinen, bei elektrischen Antrieben in E-Cars und Schienenfahrzeugen gefordert wird.

Das Epoxydharz weist dabei im verarbeiteten Zustand, also in der Nutaussparung eine Dichte, ähnlich Wasser also ca. 1,7-2,1 g/cm³ auf. Im Vergleich dazu weist Elektroblech eine Dichte von ca. 7,8 g/cm³ auf.

Der Käfigläufer der Asynchronmaschine ist mit radial geschlossenen oder teilgeöffneten Nutaussparungen bzw. Nuten ausgeführt, was die Nutstreureaktanz und damit den Betrieb der Asynchronmaschine beeinflusst.

Die teilgeöffneten Nuten werden dabei insbesondere durch spanabhebendes Abdrehen des Rotorblechpaketes geschaffen. Durch geometrische Gestaltung insbesondere des radial äußeren Bereichs der Nutaussparung kann die Teilöffnung der Nut nach dem Abdrehen gestaltet werden. Mit anderen Worten - eine rundliche Nutaussparung führt nach dem Abdrehen zu einer anderen Teilöffnung der Nut als eine dreiecksförmige Nutaussparung.

Durch die Schrägung der Leiterstäbe werden u.a. die Nutrastmomente des Rotors reduziert.

Die Erfindung sowie weitere vorteilhafte Ausgestaltungen der Erfindung werden anhand eines Ausführungsbeispiels näher erläutert. Darin zeigen:
- FIG 1: einen Längsschnitt durch eine Asynchronmaschine,
- FIG 2: einen Querschnitt durch einen Rotor,
- FIG 3: eine perspektivische Darstellung eines Halbkäfigs,
- FIG 4 bis 6: Ausschnitte eines Rotorblechs mit unterschiedlichen Leiterstabformen.

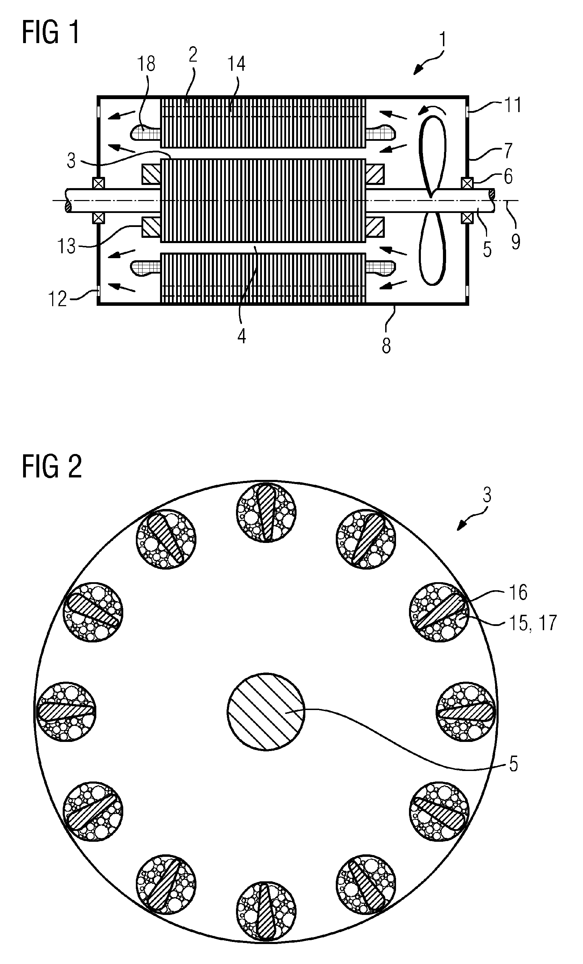

FIG 1 zeigt im Längsschnitt eine Asynchronmaschine 1, die in einem Gehäuse 8 angeordnet ist. Die Asynchronmaschine 1 weist einen Stator 2 auf, der in axialer Richtung geblecht ausgeführt ist und der ein Wicklungssystem 18 aufweist, das in Nuten angeordnet ist, die zu einem Luftspalt 4 der dynamoelektrischen Maschine 1 weisen. Im Bereich des Rückens des Blechpakets des Stators 2 sind im wesentlichen axialverlaufende Kühlkanäle 14 angeordnet, durch die Kühlluft geführt werden kann.

Durch den Luftspalt 4 vom Stator 2 beabstandet ist ein Rotor 3 angeordnet, in diesem Fall ein Kurzschlusskäfigläufer, der drehfest mit einer Welle 5 verbunden ist, die sich um eine Achse 9 dreht. Die Welle 5 stützt sich über Lager 6 in Lagerschilden 11 ab, die im Gehäuse 8 angeordnet sind. Die Lagerschilde 7 weisen Einlässe 11 bzw. Auslässe 12 auf, um die dynamoelektrische Maschine 1 als durchzugsbelüftete Maschine ausführen zu können.

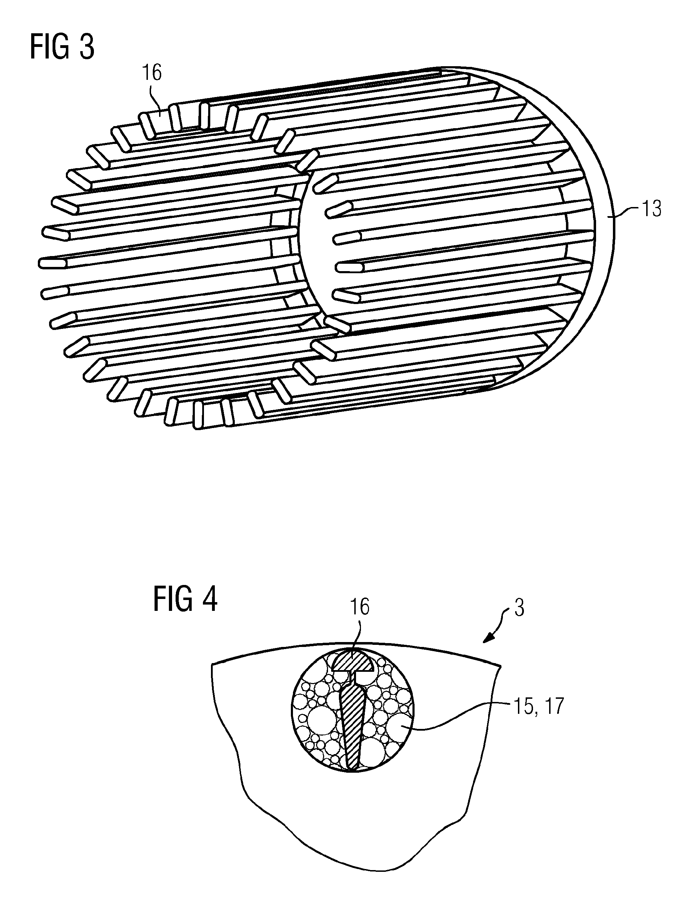

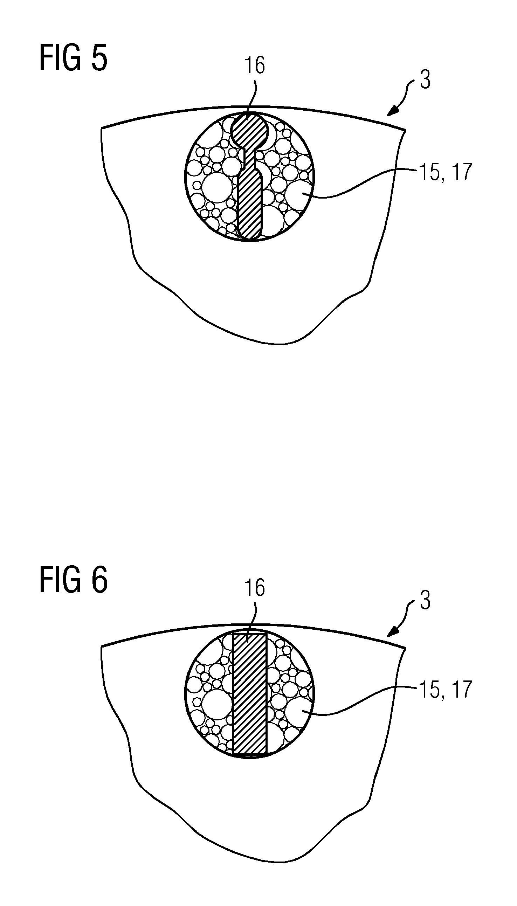

FIG 2 zeigt den Rotor 3 mit zwölf Nutaussparungen 15, in denen jeweils ein Leiterstab 16 angeordnet ist. Die Nutaussparung 15 ist dabei wesentlich größer dimensioniert als der Leiterstab 16 und stellt somit einen Universalblechschnitt für andere Käfigläufer gleicher Achshöhe dar. Damit lassen sich nunmehr in die Nutaussparung 15 auch Leiterstäbe einsetzen, wie sie die Figuren 4 bis 6 aufzeigen, d.h. im wesentlichen Doppelstäbe unterschiedlichster Formgebung, Rundstabquerschnitte oder auch Hochstabquerschnitte.

Die in dem Epoxydkleber befindlichen Partikel in der Nutaussparung 15 sind aus zeichnerischen Gründen teilweise überdimensioniert dargestellt.

Der verbleibende Raum zwischen den Leiterstäben und der Innenseite der Nutaussparung 15 wird erfindungsgemäß durch einen Epoxydkleber bzw. Epoxydharzkleber mit magnetisierbaren Partikeln ausgekleidet. Dabei ergibt sich eine Fixierung der Leiterstäbe 16 in der Nutaussparung 15, als auch eine bedingte Isolation des Leiterstabes 16 zum Blechpaket des Rotors 3, ebenso wie eine ausreichende magnetische Leitfähigkeit um Stromverdrängungseffekte des Kurzschlussläufers zu garantieren.

In die Nutaussparungen 15 werden entweder einzelne Leiterstäbe eingesetzt oder ein Halbkäfig gemäß FIG 3, wobei dabei an einem Kurzschlussring 13 bereits einseitig Leiterstäbe angeschweißt, angegossen oder angelötet sind, wobei dann der gesamte Halbkäfig in ein Blechpaket mit Nutaussparungen 15 eingesetzt wird.

Vorteilhafterweise kann dabei durch eine vorgegebene Verwindung des Blechpakets des Rotors 3 um die Achse 19 eine Schrägung der Nuten geschaffen werden, was für die Reduzierung der Drehmomentwelligkeit vorteilhaft ist.

In dem Verfahren zur Herstellung eines derartigen Käfigläufers sind nunmehr selbstverständlich die fehlenden Kurzschlussringe zu kontaktieren bzw. anzuschweißen oder zu löten.

## Patentansprüche

1. Käfigläufer einer Asynchronmaschine mit radial geschlossenen oder teilgeöffneten Nutaussparungen (15), mit Leiterstäben (16), die in den Nutaussparungen (15) angeordnet sind und die durch einen metallischen Epoxydkleber in den Nutaussparungen (15) fixiert sind.

2. Rotatorische dynamoelektrische Maschine oder lineare dynamoelektrische Maschine, insbesondere Asynchronmotor mit zumindest einem Käfigläufer nach Anspruch 1.

3. Werkzeugmaschine, E-Car oder Schienenfahrzeug mit zumindest einer dynamolektrischen Maschine nach Anspruch 2.

4. Verfahren zur Herstellung eines Käfigläufers nach Anspruch 1 durch folgende Schritte:
- Stanzen einzelner Bleche mit Nutaussparungen,
- Paketieren der Bleche,
- Einsetzen einzelner Leiterstäbe (16) oder Leiterstäbe, die durch einen Kurzschlussring bereits auf einer Seite gebunden sind,
- Ausfüllen der Nutaussparung mit metallischem Epoxydkleber, der mit Partikeln versetzt ist,
- Kontaktieren der fehlenden Kurzschlussringe an einer oder beiden Stirnseiten des Blechpakets des Käfigläufers.

5. Verfahren nach Anspruch 4, **dadurch gekennzeichnet, dass** nach dem Einsetzen der einzelnen Leiterstäbe (16) oder eines Halbkäfigs eine vorgebbare Verdrehung des Blechpakets in Umfangsrichtung zu einer Nutschrägung führt, die sich daraus ergebenden Hohlräume zwischen Leiterstab (16) und Nutaussparung (15) werden durch metallischen Epoxydkleber ausgefüllt.

6. Verfahren nach Anspruch 4 oder 5, **dadurch gekennzeichnet, dass** der Käfigläufer spanabhebend abgedreht wird, um teilgeöffnete Nuten bzw. Nutaussparungen (15) zu erhalten.
